# EUROPEAN PATENT APPLICATION

(11) **EP 4 693 137 A1**
(43) Date of publication of application: **11.02.2026**
(21) Application number: 24779338.3
(22) Date of filing: 11.03.2024
(51) Int. Cl.: G06Q 10/30, B07C 5/16, B07C 5/342, B09B 5/00, B65F 1/00, B65F 5/00

(54) **OUTPUT DEVICE, RECOVERY DEVICE FOR PLASTIC CONTAINER, OUTPUT METHOD, AND RECORDING MEDIUM**

(30) Priority: 28.03.2023 JP 2023052119
(71) Applicant: SUNTORY HOLDINGS LIMITED, 5308203 Osaka City, Osaka (CN)
(72) Inventor: HOSOKAWA, Tomohiro, Tokyo 108-8503 (JP); TADANO, Hiroshi, Tokyo 108-8503 (JP); ENOKI, Yuri, Tokyo 108-8503 (JP); SATO, TADAMICHI, Tokyo 108-8503 (JP)
(74) Representative: Vossius & Partner Patentanwälte Rechtsanwälte mbB
(86) International application number: PCT/JP2024/009271
(87) International publication number: WO 2024/203207

(57) **Abstract**

In order to solve the conventional problem that it is difficult to assist in good recycling of plastic containers, a the collection apparatus A for plastic containers includes an output apparatus 1 including: a state acquisition unit 122 that acquires state information for specifying a state of recycling of a plastic container such as a plastic bottle, examples of which include information on one or two or more states among presence or absence of a label on the plastic container, presence or absence of a cap thereon, whether or not the plastic container has been crushed, whether or not the plastic container has been rinsed out, and presence or absence of an unfinished drink (leftover) in the plastic container; and an information output unit 131 that outputs information that is based on the state information. Accordingly, it is possible to assist in good recycling of plastic containers.

## Description

### Technical field

The present invention relates to an output apparatus for outputting information according to the state of recycling of plastic containers, and the like.

### Background Art

Conventionally, there have been plastic bottle sorting apparatuses that sort plastic bottles from mixed container waste being conveyed on a conveying line (see Patent Document 1).

### Citation List

### Patent Document

Patent Document 1: JP 2015-20314A

### Summary of Invention

### Technical Problem

However, in conventional techniques, for example, it has not been possible to acquire and output state information for specifying the state of recycling of plastic containers such as plastic bottles. Therefore, in conventional techniques, it has not been possible to assist in good recycling according to the state of plastic containers.

### Solution to Problem

A first aspect of the present invention is directed to an output apparatus including: a state acquisition unit that acquires state information for specifying a state of recycling of a plastic container; and an information output unit that outputs information that is based on the state information.

With this configuration, it is possible to acquire and output the state information on the recycling of a plastic container. Therefore, this configuration enables good recycling of a plastic container according to the state of the plastic container.

Furthermore, a second aspect of the present invention is directed to the output apparatus according to the first aspect, wherein the state acquisition unit acquires sensing information on a plastic container placed into a collection apparatus, with respect to recycling of the plastic container, and acquires the state information using the sensing information.

With this configuration, it is possible to assist in good recycling of a plastic container.

Furthermore, a third aspect of the present invention is directed to the output apparatus according to the second aspect, wherein the sensing information is a captured image of the plastic container, and the state acquisition unit acquires the state information using the captured image.

With this configuration, it is possible to assist in good recycling of a plastic container.

Furthermore, a fourth aspect of the present invention is directed to the output apparatus according to the second or third aspect, wherein the sensing information is a weight acquired using a weight sensor, and the state acquisition unit acquires the state information using the weight.

With this configuration, it is possible to assist in good recycling of a plastic container.

Furthermore, a fifth aspect of the present invention is directed to the output apparatus according to any one of the first to fourth aspects, wherein the state information acquires state information containing a score that is based on the state of the recycling of the plastic container.

With this configuration, it is possible to assist in good recycling of a plastic container.

Furthermore, a sixth aspect of the present invention is directed to the output apparatus according to any one of the first to fifth aspects, wherein the state of the recycling of the plastic container includes one or two or more states among presence or absence of a label on the plastic container, presence or absence of a cap thereon, whether or not the plastic container has been crushed, whether or not the plastic container has been rinsed out, and presence or absence of an unfinished drink (leftover) in the plastic container.

With this configuration, it is possible to assist in good recycling of a plastic container.

Furthermore, a seventh aspect of the present invention is directed to the output apparatus according to any one of the first to sixth aspects, further including: a statistical processing unit that performs statistical processing on the state information on two or more plastic containers acquired by the state acquisition unit, thereby acquiring statistical results; and a statistical output unit that outputs the statistical results.

With this configuration, it is possible to grasp the recycling status of multiple plastic containers.

Furthermore, an eighth aspect of the present invention is directed to the output apparatus according to any one of the first to seventh aspects, further including: an identifier acquisition unit that acquires a user identifier of a user who threw away the plastic container, wherein the information output unit outputs information that is based on the state information in a pair with the user identifier.

With this configuration, it is possible to output the recycling status of a plastic container for each user.

Furthermore, a ninth aspect of the present invention is directed to a collection apparatus for plastic containers, including the output apparatus according to any one of the first to eighth aspects.

With this configuration, it is possible to assist in good recycling of a plastic container.

Furthermore, a tenth aspect of the present invention is directed to an output apparatus, including: a state acquisition unit that receives sensing information on a plastic container placed into a collection apparatus for plastic containers, and acquires state information for specifying a state of recycling of the plastic container, using the sensing information; and an information output unit that outputs information that is based on the state information.

With this configuration, it is possible to assist in good recycling of a plastic container.

### Advantageous Effects of Invention

With the output apparatus according to the present invention, it is possible to assist in good recycling of plastic containers.

### Brief Description of Drawings

FIG. 1 is a conceptual diagram of a collection apparatus A in Embodiment 1.
FIG. 2 is a block diagram of the collection apparatus A in the embodiment.
FIG. 3 is a flowchart illustrating an operation example of an output apparatus 1 in the embodiment.
FIG. 4 is a diagram illustrating a specific operation example of the collection apparatus A in the embodiment.
FIG. 5 is a diagram illustrating a specific operation example of the collection apparatus A in the embodiment.
FIG. 6 is a conceptual diagram of a collection system B in Embodiment 2.
FIG. 7 is a block diagram of the collection system B in the embodiment.
FIG. 8 is a flowchart illustrating an operation example of a collection apparatus 3 in the embodiment.
FIG. 9 is a flowchart illustrating an operation example of an output apparatus 4 in the embodiment.

### Description of Embodiments

Hereinafter, embodiments of an output apparatus and the like will be described with reference to the drawings. It should be noted that constituent elements denoted by the same reference numerals in the embodiments perform similar operations, and thus a description thereof may not be repeated.

### Embodiment 1

In this embodiment, an output apparatus will be described that outputs information according to a state of the recycling of a plastic container. The state is detected, for example, using an image, a weight sensor, or the like.

Furthermore, in this embodiment, an output apparatus will be described that performs statistical processing on information on a state of two or more plastic containers, and outputs the statistical results.

Furthermore, in this embodiment, an output apparatus will be described that outputs information according to a state of the recycling of one or more plastic containers for each user.

Moreover, in this embodiment, a collection apparatus for plastic containers will be described that includes the above-mentioned output apparatus.

In this specification, the state in which information X is associated with information Y means that the information Y can be acquired from the information X or the information X can be acquired from the information Y, and there is no limitation on the method for associating the information. The information X and the information Y may be linked to each other or in the same buffer. The information X may be contained in the information Y, or the information Y may be contained in the information X, for example.

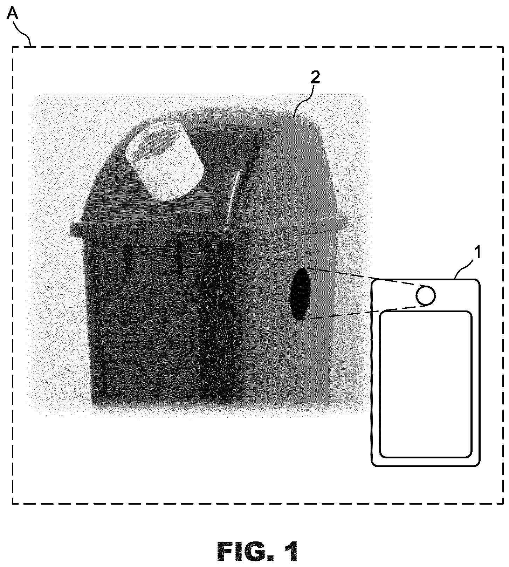

FIG. 1 is a conceptual diagram of a collection apparatus A in in this embodiment. The collection apparatus A in this example includes an output apparatus 1 equipped with a camera. The collection apparatus A may include a collection box 2. The output apparatus 1 may be considered to include the collection box 2.

The output apparatus 1 is an apparatus that acquires sensing information on a plastic container, and acquires state information or performs statistical processing using the sensing information. The output apparatus 1 is realized by, for example, a personal computer, a smartphone, a tablet device, or the like, but there is no limitation on the type thereof.

The collection box 2 is a box having an area into which plastic containers are placed. The collection box 2 has an inlet for plastic containers. The inlet may be formed as a hole, or may be formed when an openable lid is opened, for example. The collection box 2 is made of, for example, resin, but may be made of metal. There is no limitation on the material of the collection box 2. There is no limitation on the shape of the collection box 2.

Plastic containers are containers in which a beverage or food product or the like was contained, or containers in which a beverage or food product or the like is contained. The plastic containers are, for example, beverage containers, food containers, or the like. The plastic containers are typically plastic bottles. The beverage is, for example, water, tea, juice, beer, or the like, but there is no limitation on the type thereof. There is no limitation on the type of plastic containers. The food product is, for example, boxed lunches, soup, or the like, but there is no limitation on the type thereof. The plastic containers in this example also include plastic containers for detergents, shampoos, cosmetics, and the like, in addition to those for beverage and food products. There is no limitation on the contents of plastic containers, and examples thereof include beverage and food products, detergents, shampoos, cosmetics, and the like, as mentioned above.

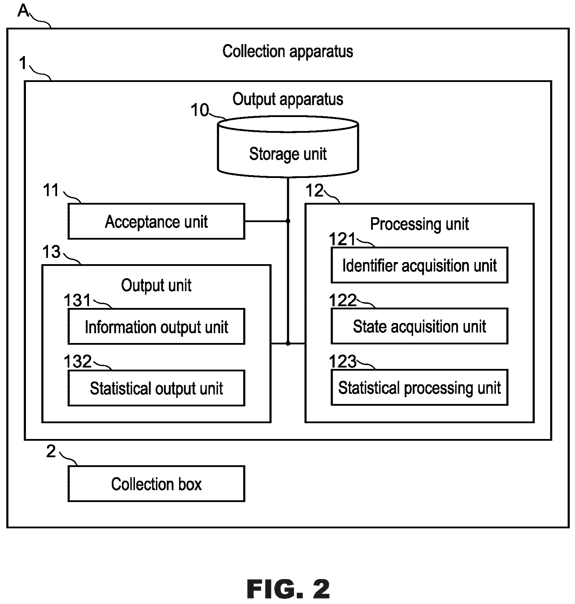

FIG. 2 is a block diagram of the collection apparatus A in this embodiment. As mentioned above, the collection apparatus A may include the collection box 2.

The output apparatus 1 includes a storage unit 10, an acceptance unit 11, a processing unit 12, and an output unit 13. The processing unit 12 includes an identifier acquisition unit 121, a state acquisition unit 122, and a statistical processing unit 123. The output unit 13 includes an information output unit 131 and a statistical output unit 132.

Various types of information are stored in the storage unit 10 constituting the output apparatus 1. The various types of information are, for example, later-described one or more learning models or later-described various images.

The acceptance unit 11 accepts various types of instructions and information. The various types of instructions and information are, for example, a placement instruction, a statistical instruction, or a user identifier.

The acceptance unit 11 receives, for example, instructions and information from an unshown user terminal. The user terminal is a terminal that is used by a user. The user terminal is, for example, a smartphone or a tablet device, but it may be a so-called personal computer, and there is no limitation on the type thereof. The user in this example is a person who throws away a plastic container. The acceptance unit 11 accepts, for example, instructions and information input by the user.

The placement instruction is an instruction to place a plastic container. In response to the acceptance of the placement instruction, for example, the output apparatus 1 opens the inlet of the collection box 2. In response to the acceptance of the placement instruction, for example, a camera constituting the state acquisition unit 122 is turned on or begins capturing images. The placement instruction has, for example, a user identifier. The user identifier may be associated with an organization identifier. The placement instruction has, for example, an organization identifier. The acceptance unit 11 may accept a placement instruction, for example, by reading a user identifier from an IC card on which the user identifier is recorded.

The statistical instruction is an instruction to perform statistical processing.

The user identifier is information for identifying a user. The user identifier is, for example, a user's ID, e-mail address, or telephone number. The organization identifier is information for identifying an organization. The organization is a group or a division such as a company, a school, a local government, a municipality, or the like. The organization is, for example, a division, department, section, or the like of a company. There is no limitation on the type, unit, and the like of an organization. The organization identifier is, for example, an organization' name or an organization's ID.

The various types of instructions and information accepted by the acceptance unit 11 may be input by any input part such as a reception part, a touch screen, a keyboard, a mouse, or a menu screen.

The processing unit 12 performs various types of processing. The various types of processing are, for example, processing that is performed by the identifier acquisition unit 121, the state acquisition unit 122, or the statistical processing unit 123.

The processing unit 12 determines, for example, whether or not a score or one or more pieces of state information acquired by the state acquisition unit 122 match a processing condition. If the processing condition is matched, predetermined specific processing is performed.

The processing condition is a condition for performing predetermined specific processing. The processing condition is, for example, a condition that is based on state information. The condition that is based on state information is, for example, that the score is less than or equal to a threshold value or is less than the threshold value or that a specific type of state information has a specific value (e.g., "with unfinished drink"). The an unfinished drink may be widely considered to be a leftover or the like.

The predetermined specific processing is, for example, to output a warning, to prevent a plastic container from being placed into the collection box 2, or to eject a plastic container from the collection box 2.

The identifier acquisition unit 121 acquires a user identifier of a user who placed a plastic container into the collection box 2. The identifier acquisition unit 121 typically acquires a user identifier accepted by the acceptance unit 11.

The identifier acquisition unit 121 acquires an organization identifier of an organization to which a user who placed a plastic container into the collection box 2 belongs. The identifier acquisition unit 121 typically acquires an organization identifier accepted by the acceptance unit 11.

The state acquisition unit 122 acquires one or two or more types of state information. The state acquisition unit 122 acquires one or more types of state information of each of one or two or more plastic containers.

The state acquisition unit 122 acquires, for example, state information associated with a user identifier. The state acquisition unit 122 acquires, for example, state information associated with an organization identifier.

The state information is information for specifying the state of the recycling of a plastic container. The state of the recycling of a plastic container is, for example, the presence or absence of a label on the plastic container, the presence or absence of a cap on the plastic container, whether or not the plastic container has been crushed, whether or not the plastic container has been rinsed out, or the presence or absence of an unfinished drink (leftover) in the plastic container. The state information preferably contains information for specifying one or two or more states among the above-listed states.

The state information is, for example, one of the following types of information. The state information is, for example, information indicating the presence or absence of a label on the plastic container, information indicating the presence or absence of a cap on the plastic container, information indicating whether or not the plastic container has been crushed, information indicating the degree to which the plastic container has been crushed, information indicating whether or not the plastic container has been rinsed out, information indicating the degree to which the plastic container has been rinsed out, information indicating the presence or absence of an unfinished drink (leftover) in the plastic container, information indicating the degree to which an unfinished drink (leftover) is present in the plastic container or the amount of the unfinished drink (leftover), or information indicating whether or not the placed object is a foreign object. The one or two or more pieces of state information may contain a score that is based on the state of the recycling of the plastic container.

The state acquisition unit 122 acquires, for example, sensing information on a plastic container. Next, the state acquisition unit 122 acquires, for example, one or two or more types of state information, using the sensing information.

The sensing information is information obtained as a result of sensing a plastic container that has been placed into the collection apparatus A. The sensing information is, for example, a captured image of the plastic container, the weight of the plastic container, or the overall weight in the collection box 2. The plastic container that has been placed into the collection apparatus A is typically a plastic container that has been placed into the collection box 2.

The state acquisition unit 122 that acquires the sensing information is, for example, realized by a camera. For example, the state acquisition unit 122 captures an image of a plastic container that is to be placed into the collection box 2 or that has been placed into the collection box 2, thereby acquiring a captured image.

The state acquisition unit 122 that acquires the sensing information is, for example, realized by a weight sensor. For example, the state acquisition unit 122 acquires the weight of a plastic container that has been placed into the collection box 2.

The state acquisition unit 122 acquires the state information, for example, using the acquired captured image. The state acquisition unit 122 acquires the state information, for example, using the acquired weight.

Hereinafter, the details of the processing in which the state acquisition unit 122 acquires state information from acquired sensing information will be described.

### (1) Case of Acquiring State Information from Captured Image

### (1-1) Case of Using Machine Learning

Any machine learning algorithm can be used in this specification, such as deep learning, random forest, decision tree, SVM, or the like. For machine learning, for example, various machine learning functions such as the TensorFlow (registered trademark) library, random forest modules in the R language, fastText, TinySVM, and various other existing libraries can be used. In the case of building a multi-valued classification learning model as described below or in the case of performing prediction processing using a multi-valued classification learning model, SVR may be used as the machine learning algorithm.

The learning model is information configured through learning processing of machine learning, and is information that is used in prediction processing of machine learning. The learning model may also be said to be a learner, a classifier, a classification model, or the like.

### (1-1-1) Case of Using Multiple Learning Models Respectively for Types of State Information to Be Acquired

### (a) Presence or Absence of Label on Plastic Container

The processing unit 12 or an unshown learning apparatus gives one or more positive example images that are images of plastic containers with labels removed and one or more negative example images that are images of plastic containers with labels still attached to a learning module of machine learning, and executes the learning module, thereby generating a first learning model. It is assumed that then, the first learning model is accumulated in the output apparatus 1. Note that the first learning model is a model for outputting a first prediction result (e.g., "1") indicating that a label has been removed from a plastic container or a first prediction result (e.g., "0") indicating that a label is still attached to a plastic container.

The state acquisition unit 122 gives the acquired captured image and the first learning model to a prediction module of machine learning, and executes the prediction module, thereby obtaining a first prediction result.

### (b) Presence or Absence of Cap on Plastic Container

The processing unit 12 or an unshown learning apparatus gives one or more positive example images that are images of plastic containers without caps thereon and one or more negative example images that are images of plastic containers with caps thereon to a learning module of machine learning, and executes the learning module, thereby generating a second learning model. It is assumed that then, the second learning model is accumulated in the output apparatus 1. Note that the second learning model is a model for outputting a second prediction result (e.g., "1") indicating that a plastic container has no cap thereon or a second prediction result (e.g., "0") indicating that a plastic container has a cap thereon.

The state acquisition unit 122 gives the acquired captured image and the second learning model to a prediction module of machine learning, and executes the prediction module, thereby obtaining a second prediction result.

### (c) Whether or Not Plastic Container Has Been Crushed

### (c-1) Case of Using Binary Classification Learning Model

The processing unit 12 or an unshown learning apparatus gives one or more positive example images that are images of plastic containers that have been crushed and one or more negative example images that are images of plastic containers that have not been crushed to a learning module of machine learning, and executes the learning module, thereby generating a third learning model (a). It is assumed that then, the third learning model (a) is accumulated in the output apparatus 1. Note that the third learning model (a) is a model for outputting a third prediction result (e.g., "1") indicating that a plastic container has been crushed or a third prediction result (e.g., "0") indicating that a plastic container has not been crushed.

The state acquisition unit 122 gives the acquired captured image and the third learning model (a) to a prediction module of machine learning, and executes the prediction module, thereby obtaining a third prediction result.

### (c-2) Case of Using Multi-Valued Classification Learning Model

The processing unit 12 or an unshown learning apparatus gives two or more pieces of training data each having an image of a plastic container that has been crushed or that has not been crushed and a value (e.g., on a scale of 1 to 10) indicating the degree to which the plastic container has been crushed to a learning module of machine learning, and executes the learning module, thereby generating a third learning model (β). It is assumed that then, the third learning model (B) is accumulated in the output apparatus 1. Note that the third learning model (B) is a model for outputting a third prediction result indicating the degree to which a plastic container has been crushed.

The state acquisition unit 122 gives the acquired captured image and the third learning model (β) to a prediction module of machine learning, and executes the prediction module, thereby obtaining a third prediction result. The third prediction result is a value indicating the degree to which the plastic container has been crushed.

### (d) Whether or Not Plastic Container Has Been Rinsed Out

### (d-1) Case of Using Binary Classification Learning Model

The processing unit 12 or an unshown learning apparatus gives one or more positive example images that are images of plastic containers that have been rinsed out and one or more negative example images that are images of plastic containers that have not been rinsed out to a learning module of machine learning, and executes the learning module, thereby generating a fourth learning model (α). It is assumed that then, the fourth learning model (α) is accumulated in the output apparatus 1. Note that the fourth learning model (α) is a model for outputting a fourth prediction result (e.g., "1") indicating that a plastic container has been rinsed out or a fourth prediction result (e.g., "0") indicating that a plastic container has not been rinsed out.

The state acquisition unit 122 gives the acquired captured image and the fourth learning model (α) to a prediction module of machine learning, and executes the prediction module, thereby obtaining a fourth prediction result.

### (d-2) Case of Using Multi-Valued Classification Learning Model

The processing unit 12 or an unshown learning apparatus gives two or more pieces of training data each having an image of a plastic container that has been rinsed out or that has not been rinsed out and a value (e.g., on a scale of 1 to 10) indicating the degree to which the plastic container has been rinsed out to a learning module of machine learning, and executes the learning module, thereby generating a fourth learning model (β). It is assumed that then, the fourth learning model (β) is accumulated in the output apparatus 1. Note that the fourth learning model (β) is a model for outputting a fourth prediction result indicating the degree to which a plastic container has been rinsed out.

The state acquisition unit 122 gives the acquired captured image and the fourth learning model (β) to a prediction module of machine learning, and executes the prediction module, thereby obtaining a fourth prediction result. The fourth prediction result is a value indicating the degree to which the plastic container has been rinsed out.

### (e) Presence or Absence of Unfinished Drink (Leftover) in Plastic Container

### (e-1) Case of Using Binary Classification Learning Model

The processing unit 12 or an unshown learning apparatus gives one or more positive example images that are images of plastic containers without unfinished drinks (leftovers) and one or more negative example images that are images of plastic containers with unfinished drinks (leftovers) to a learning module of machine learning, and executes the learning module, thereby generating a fifth learning model (α). It is assumed that then, the fifth learning model (α) is accumulated in the output apparatus 1. Note that the fifth learning model (α) is a model for outputting a fifth prediction result (e.g., "1") indicating that a plastic container does not have an unfinished drink (leftover) or a fifth prediction result (e.g., "0") indicating that a plastic container has an unfinished drink (leftover).

The state acquisition unit 122 gives the acquired captured image and the fifth learning model (α) to a prediction module of machine learning, and executes the prediction module, thereby obtaining a fifth prediction result.

### (e-2) Case of Using Multi-Valued Classification Learning Model

The processing unit 12 or an unshown learning apparatus gives two or more pieces of training data each having an image of a plastic container without an unfinished drink (leftover) or with an unfinished drink (leftover) and a value (e.g., on a scale of 1 to 5) indicating the degree to which the unfinished drink (leftover) is present to a learning module of machine learning, and executes the learning module, thereby generating a fifth learning model (β). It is assumed that then, the fifth learning model (β) is accumulated in the output apparatus 1. Note that the fifth learning model (β) is a model for outputting a fifth prediction result indicating the degree to which a plastic container has been rinsed out.

The state acquisition unit 122 gives the acquired captured image and the fifth learning model (β) to a prediction module of machine learning, and executes the prediction module, thereby obtaining a fifth prediction result. The fifth prediction result is a value indicating the degree to which the plastic container has been rinsed out.

### (1-1-2) Case of Acquiring Score Using One Learning Model

The processing unit 12 or an unshown learning apparatus gives two or more pieces of training data respectively having images of various plastic containers and scores of the states of the recycling of the plastic containers to a learning module of machine learning, and executes the learning module, thereby generating a sixth learning model. It is assumed that then, the sixth learning model is accumulated in the output apparatus 1. Note that the sixth learning model is a model for outputting a sixth prediction result indicating a score of the state of the recycling of a plastic container.

The state acquisition unit 122 gives the acquired captured image and the sixth learning model to a prediction module of machine learning, and executes the prediction module, thereby obtaining a sixth prediction result. The sixth prediction result is a score of the state of the recycling of the plastic container.

### (1-2) Case of Using Image Recognition

The state acquisition unit 122 performs image recognition on an acquired captured image, thereby acquiring first state information indicating the presence or absence of a label on the plastic container. The state acquisition unit 122 performs image recognition on the captured image, thereby acquiring second state information indicating the presence or absence of a cap on the plastic container. The state acquisition unit 122 performs image recognition on the captured image, thereby acquiring third state information indicating whether or not the plastic container has been crushed. The state acquisition unit 122 performs image recognition on the captured image, thereby acquiring fourth state information indicating whether or not the plastic container has been rinsed out. The state acquisition unit 122 performs image recognition on the captured image, thereby acquiring fifth state information indicating the presence or absence of an unfinished drink (leftover) in the plastic container.

### (1-3) Case of Using Image Similarity

The state acquisition unit 122 calculates the similarity between the acquired captured image and an image of a plastic container with a label thereon, and acquires the first state information "with label" in the case in which the similarity is greater than or equal to a threshold value or is greater than the threshold value or acquires the first state information "without label" in the case in which the similarity is less than or equal to a threshold value or is less than the threshold value. The state acquisition unit 122 may calculate the similarity between the captured image and an image of a plastic container with no label thereon, and acquire the first state information "without label" in the case in which the similarity is greater than or equal to a threshold value or is greater than the threshold value or acquire the first state information "with label" in the case in which the similarity is less than or equal to a threshold value or is less than the threshold value. The image of a plastic container with a label thereon and the image of a plastic container with no label thereon are stored in the storage unit 10 of the output apparatus 1. The state acquisition unit 122 may acquire the above-described similarity or a numerical value acquired using an operation expression having the similarity as a parameter, as the first state information.

The state acquisition unit 122 calculates the similarity between the acquired captured image and an image of a plastic container with a cap thereon, and acquires the second state information "with cap" in the case in which the similarity is greater than or equal to a threshold value or is greater than the threshold value or acquires the second state information "without cap" in the case in which the similarity is less than or equal to a threshold value or is less than the threshold value. The state acquisition unit 122 may calculate the similarity between the captured image and an image of a plastic container with no cap thereon, and acquire the second state information "without cap" in the case in which the similarity is greater than or equal to a threshold value or is greater than the threshold value or acquire the second state information "with cap" in the case in which the similarity is less than or equal to a threshold value or is less than the threshold value. The image of a plastic container with a cap thereon and the image of a plastic container with no cap thereon are stored in the storage unit 10 of the output apparatus 1. The state acquisition unit 122 may acquire the above-described similarity or a numerical value acquired using an operation expression having the similarity as a parameter, as the second state information.

The state acquisition unit 122 calculates the similarity between the acquired captured image and an image of a plastic container that has not been crushed, and acquires the third state information "not crushed" in the case in which the similarity is greater than or equal to a threshold value or is greater than the threshold value or acquires the third state information "crushed" in the case in which the similarity is less than or equal to a threshold value or is less than the threshold value. The state acquisition unit 122 may calculate the similarity between the captured image and an image of a plastic container that has been crushed, and acquire the third state information "crushed" in the case in which the similarity is greater than or equal to a threshold value or is greater than the threshold value or acquire the third state information "not crushed" in the case in which the similarity is less than or equal to a threshold value or is less than the threshold value. The image of a plastic container that has not been crushed and the image of a plastic container that has been crushed are stored in the storage unit 10 of the output apparatus 1. The state acquisition unit 122 may acquire the above-described similarity or a numerical value acquired using an operation expression having the similarity as a parameter, as the third state information.

The state acquisition unit 122 calculates the similarity between the acquired captured image and an image of a plastic container that has been rinsed out, and acquires the fourth state information "rinsed out" in the case in which the similarity is greater than or equal to a threshold value or is greater than the threshold value or acquires the fourth state information "not rinsed out" in the case in which the similarity is less than or equal to a threshold value or is less than the threshold value. The state acquisition unit 122 may calculate the similarity between the captured image and an image of a plastic container that has not been rinsed out, and acquire the fourth state information "not rinsed out" in the case in which the similarity is greater than or equal to a threshold value or is greater than the threshold value or acquire the fourth state information "rinsed out" in the case in which the similarity is less than or equal to a threshold value or is less than the threshold value. The image of a plastic container that has been rinsed out and the image of a plastic container that has not been rinsed out are stored in the storage unit 10 of the output apparatus 1. The state acquisition unit 122 may acquire the above-described similarity or a numerical value acquired using an operation expression having the similarity as a parameter, as the fourth state information.

The state acquisition unit 122 calculates the similarity between the acquired captured image and an image of a plastic container without an unfinished drink (leftover) therein, and acquires the fourth state information "without unfinished drink (leftover)" in the case in which the similarity is greater than or equal to a threshold value or is greater than the threshold value or acquires the fifth state information "with unfinished drink (leftover)" in the case in which the similarity is less than or equal to a threshold value or is less than the threshold value. The state acquisition unit 122 may calculate the similarity between the captured image and an image of a plastic container with an unfinished drink (leftover) therein, and acquire the fifth state information "with unfinished drink (leftover)" in the case in which the similarity is greater than or equal to a threshold value or is greater than the threshold value or acquire the fourth state information "without unfinished drink (leftover)" in the case in which the similarity is less than or equal to a threshold value or is less than the threshold value. The image of a plastic container without an unfinished drink (leftover) therein and the image of a plastic container with an unfinished drink (leftover) therein are stored in the storage unit 10 of the output apparatus 1. The state acquisition unit 122 may acquire the above-described similarity or a numerical value acquired using an operation expression having the similarity as a parameter, as the fifth state information.

### (2) Case of Acquiring State Information from Weight

The state acquisition unit 122 acquires the fifth state information indicating "with unfinished drink (leftover)" in the case in which the acquired weight of a plastic container is greater than or equal to a threshold value or is greater than the threshold value, or acquires the fifth state information indicating "without unfinished drink (leftover)" in the case in which the weight of a plastic container is less than or equal to a threshold value or is less than the threshold value. The threshold value is, for example, the weight of an empty plastic container. The threshold value is stored in an unshown recording medium of the output apparatus 1.

The state acquisition unit 122 may acquire the fifth state information indicating the amount of unfinished drink (leftover), using the acquired weight of a plastic container.

The state acquisition unit 122 preferably acquires two or more types of state information using both the captured image and the weight. For example, the state acquisition unit 122 acquires state information on the presence or absence of an unfinished drink (leftover) or state information indicating the amount of unfinished drink (leftover) using the weight of a plastic container, and acquires other types of state information using the captured image.

### (3) Regarding Acquisition of Score

The state acquisition unit 122 preferably acquires a score, using two or more types of state information out of the above-described five types of state information from the first to fifth state information. The score is a score regarding the state of recycling of a plastic container.

For example, the state acquisition unit 122 substitutes state information for an operation expression in which two or more types of state information out of the five types of state information from the first to fifth state information are respectively taken as parameters, and executes the operation expression, thereby calculating a score. The operation expression is typically an operation expression that gives higher scores (scores indicating a better state) for state information indicating that a plastic container has no label thereon, state information indicating that a plastic container has no cap thereon, state information indicating that a plastic container has been crushed, state information indicating that a plastic container has been rinsed out, and state information indicating that a plastic container has no unfinished drink (leftover) therein, than for state information indicating that a plastic container has a label thereon, state information indicating that a plastic container has a cap thereon, state information indicating that a plastic container has not been crushed, state information indicating that a plastic container has not been rinsed out, state information indicating that a plastic container has an unfinished drink (leftover) therein, respectively. The operation expression is typically an operation expression in which the larger the amount of unfinished drink (leftover), the lower the score (the worse the state indicated by the score).

For example, the state acquisition unit 122 configures a vector in which two or more types of state information out of the five types of state information from the first to fifth state information are respectively taken as elements, and acquires a score associated with the vector, from a correspondence table. The correspondence table is a table having two or more pieces of correspondence information each having a vector in which two or more types of state information are respectively taken as elements and a score.

For example, the state acquisition unit 122 configures a vector in which two or more types of state information out of the five types of state information from the first to fifth state information are respectively taken as elements. Next, for example, the state acquisition unit 122 gives the vector and the learning model to a prediction module of machine learning, and executes the prediction module, thereby acquiring a score. The learning model in this example is information acquired through learning processing of machine learning using two or more pieces of training data each having a vector in which two or more types of state information are respectively taken as elements and a score.

The statistical processing unit 123 performs statistical processing on the state information on two or more plastic containers acquired by the state acquisition unit 122, thereby acquiring statistical results.

For example, the statistical processing unit 123 performs, for each user identifier, statistical processing on two or more pieces of state information associated with the user identifier, thereby acquiring statistical results.

For example, the statistical processing unit 123 performs, for each organization identifier, statistical processing on two or more pieces of state information associated with the organization identifier, thereby acquiring statistical results.

For example, the statistical processing unit 123 performs, for each collection apparatus 3, which will be described later, statistical processing on two or more pieces of state information associated with the collection apparatus identifier, thereby acquiring statistical results.

The statistical processing may be a proportion or a total. There is no limitation on the content of the statistical processing. The statistical results are, for example, the number of plastic bottles determined as being good in terms of all types of state information, the number of plastic bottles determined as being poor for each type of state information, the average of scores for each user, or the average of scores for each collection apparatus 3.

The output unit 13 outputs various types of information. The various types of information are, for example, state information, information that is based on state information, or statistical results. The information that is based on state information may be state information or information acquired using the state information.

The output is a concept that encompasses display on a display screen, projection using a projector, printing by a printer, output of a sound, transmission to an external apparatus, accumulation in a recording medium, and delivery of a processing result to another processing apparatus or another program.

The information output unit 131 outputs information that is based on the state information acquired by the state acquisition unit 122. The information output unit 131 outputs, for example, information that is based on the state information in a pair with the user identifier.

The statistical output unit 132 outputs the statistical results acquired by the statistical processing unit 123. The statistical output unit 132 outputs the statistical results, for example, for each user or for each collection apparatus 3.

The storage unit 10 is preferably a non-volatile recording medium, but it may also be realized by a volatile recording medium. There is no limitation on the procedure in which information is stored in the storage unit 10. For example, information may be stored in the storage unit 10 via a recording medium, information transmitted via a communication line or the like may be stored in the storage unit 10, or information input via an input device may be stored in the storage unit 10.

The acceptance unit 11 is preferably realized by a wireless or wired communication part, but it may also be realized by a broadcast receiving part, a device driver for an input part such as a touch screen or a keyboard, control software for a menu screen, or the like.

The processing unit 12, the state acquisition unit 122, the identifier acquisition unit 121, and the statistical processing unit 123 may be typically realized by processors, memories, or the like. Typically, the processing procedure of the processing unit 12 and the like is realized by software, and the software is stored in a recording medium such as a ROM. However, the processing unit 12 and the like may be realized by hardware (dedicated circuits). The processors are, for example, CPUs, MPUs, GPUs, or the like, but there is no limitation on the type thereof.

The output unit 13, the information output unit 131, and the statistical output unit 132 may be realized, for example, by wireless or wired communication parts, driver software for an output apparatus such as a display screen or a speaker, a combination of driver software for an output apparatus and the output apparatus, or the like.

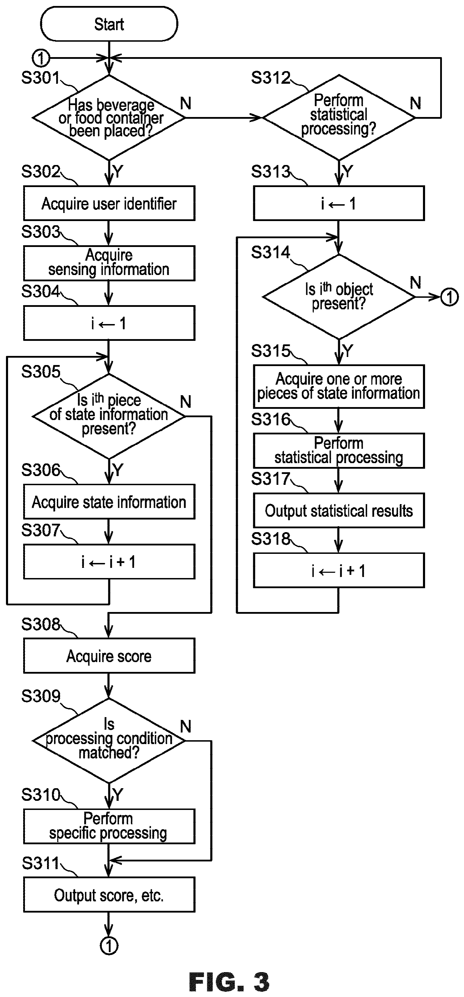

Next, an operation example of the output apparatus 1 constituting the collection apparatus A will be described with reference to the flowchart in FIG. 3.

(Step S301) The acceptance unit 11 determines whether or not a plastic container has been placed into the collection box 2. If a plastic container has been placed, the procedure advances to step S302, or otherwise the procedure advances to step S312.

The acceptance unit 11 determines, for example, whether or not it has accepted a placement instruction. The acceptance unit 11 determines, for example, whether or not it has detected that a plastic container has been placed into the collection box 2, using a sensor. The sensor is, for example, a weight sensor, a camera, or an infrared or laser sensor, but there is no limitation on the type thereof.

(Step S302) The identifier acquisition unit 121 acquires a user identifier.

(Step S303) The state acquisition unit 122 acquires sensing information. The sensing information is, for example, one or two or more of the captured image, the weight of the plastic container, and the like.

(Step S304) The state acquisition unit 122 substitutes 1 for a counter i.

(Step S305) The state acquisition unit 122 determines whether or not an i^{th} piece of state information that is to be acquired from the sensing information is present. If such an i^{th} piece of state information is present, the procedure advances to step S306, or otherwise the procedure advances to step S308.

(Step S306) The state acquisition unit 122 acquires the i^{th} piece of state information of the placed plastic container using the sensing information, and accumulates the information in a pair with the user identifier in an unshown buffer.

The i^{th} piece of state information is an i^{th} type of state information. The i^{th} piece of state information is, for example, the presence or absence of a label on the plastic container, the presence or absence of a cap on the plastic container, whether or not the plastic container has been crushed or the degree thereof, whether or not the plastic container has been rinsed out or the degree thereof, or the presence or absence of an unfinished drink (leftover) in the plastic container or the degree thereof. If the user identifier cannot be acquired in this case, for example, only the state information is accumulated.

(Step S307) The state acquisition unit 122 increments the counter i by 1. The procedure returns to step S305.

(Step S308) The state acquisition unit 122 acquires a score of the plastic container using the one or two or more pieces of state information acquired in step S306, and accumulates the score in a pair with the user identifier in the unshown buffer. If the user identifier cannot be acquired in this case, for example, only the score is accumulated.

(Step S309) The processing unit 12 determines whether or not the score or the one or more pieces of state information match a processing condition. If the processing condition is matched, the procedure advances to step S310, or otherwise the procedure returns to step S301.

(Step S310) The processing unit 12 performs predetermined specific processing. The specific processing is, for example, processing that grant points to a user identified with the user identifier.

(Step S311) The information output unit 131 outputs the one or more pieces of state information and the score in a pair with the user identifier. The output in this example is, for example, transmission to an unshown server, transmission to an unshown user terminal identified with the user identifier, accumulation in the storage unit 10, output of a sound, or display.

(Step S312) The acceptance unit 11 determines whether or not it has accepted a statistical instruction. If it has accepted a statistical instruction, the procedure advances to step S313, or otherwise the procedure returns to step S301.

(Step S313) The statistical processing unit 123 substitutes 1 for a counter i.

(Step S314) The statistical processing unit 123 determines whether or not an i^{th} object among those subjected to statistical processing is present. If such an i^{th} object is present, the procedure advances to step S315, or otherwise the procedure returns to step S301.

The i^{th} object is, for example, a user identifier, a state information type, or a collection apparatus identifier.

(Step S315) The statistical processing unit 123 acquires all pieces of state information corresponding to the i^{th} object. For example, the statistical processing unit 123 acquires all pieces of state information from an unshown server or the storage unit 10.

(Step S316) The statistical processing unit 123 performs statistical processing on all pieces of state information acquired in step S315, thereby acquiring statistical results.

(Step S317) The statistical output unit 132 outputs the statistical results acquired in step S316.

(Step S318) The statistical processing unit 123 increments the counter i by 1. The procedure returns to step S313.

In the flowchart in FIG. 3, the processing ends at power off or at an interruption of terminating processing.

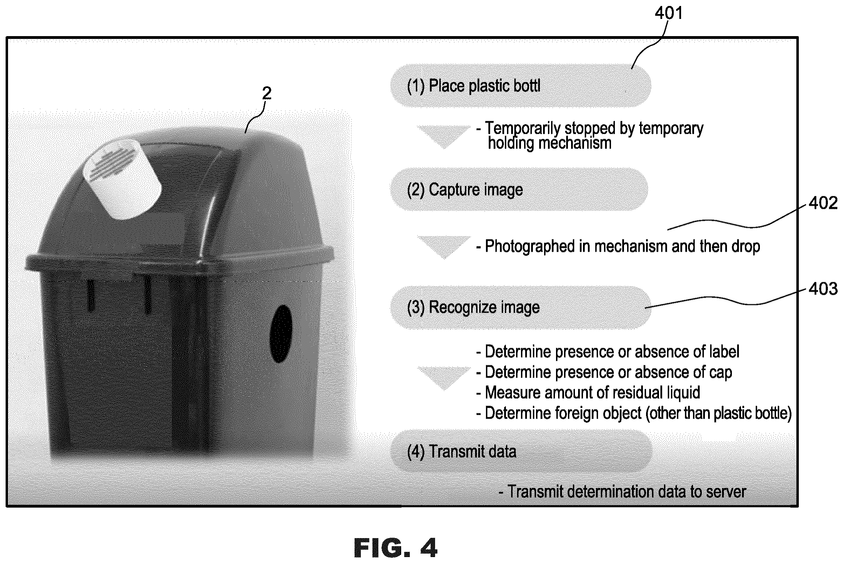

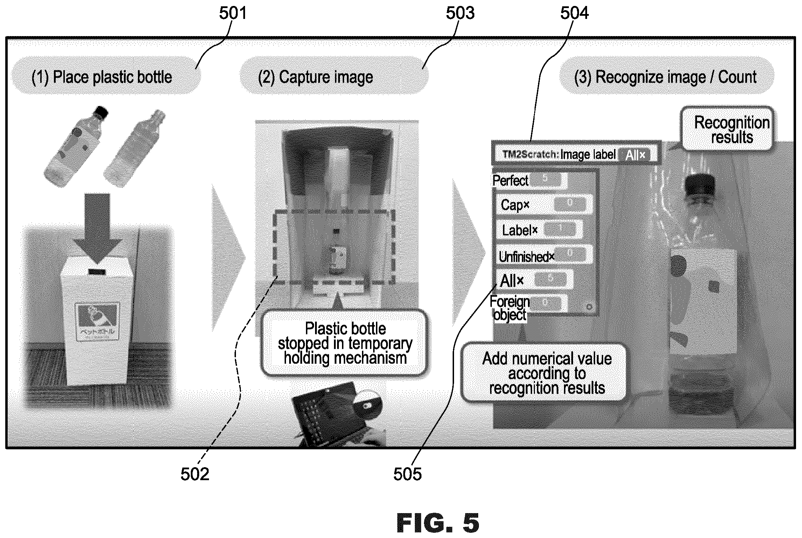

Hereinafter, a specific operation example of the collection apparatus A in this embodiment will be described with reference to FIGS. 4 and 5. It is assumed that a plastic container is a plastic bottle.

It is assumed that as shown in FIGS. 4 and 5, a person places a plastic bottle into the collection box 2 (401, 501). The plastic bottle is temporarily stopped by a temporary holding mechanism included in the collection box 2 (401, 502). Next, a camera included in the state acquisition unit 122 of the output apparatus 1 captures an image of the plastic bottle, thereby acquiring a captured image (402, 503). Subsequently, the plastic bottle drops to the bottom side of the collection box 2 (402). Next, the state acquisition unit 122 acquires multiple pieces of state information through the above-described processing on the captured image (403). The state information in this example is, for example, the presence or absence of a label on the plastic bottle, the presence or absence of a cap thereon, the amount of residual liquid, and whether or not it is a foreign object

(403). Next, the information output unit 131 transmits the acquired four pieces of state information to an unshown server.

Furthermore, it is assumed that the collection box 2 accepts plastic bottles one after another. Then, the output apparatus 1 performs the above-described processing on the plastic bottles that have been placed one after another, and transmits four pieces of state information of each of the plastic bottles to the unshown server.

The unshown server receives the four pieces of state information of each of the plastic bottles. Then, the statistical processing unit 123 included in the server acquires, for example, the determination result "all×" from the four pieces of state information of one plastic bottle (504). The statistical processing unit 123 performs statistical processing on the four pieces of state information of each of the multiple plastic bottles, thereby acquiring statistical results. Next, the statistical output unit 132 of the server outputs the statistical results. An example of such statistical results is shown as 505 in FIG. 5. Perfect "5" in 505 indicates that five plastic bottles have no labels thereon and have no caps thereon, the amount of residual liquid therein is 0, and they are not foreign objects (they are plastic bottles). Cap× "0" in 505 indicates that the number of plastic bottles with caps thereon is 0 (excluding all×). Label× "1" in 505 indicates that the number of plastic bottles with labels thereon is 1 (excluding all×). Unfinished (leftover)× "0" in 505 indicates that the number of plastic bottles with unfinished drinks (leftovers) is 0 (excluding all×). All× "5" in 505 indicates that five plastic bottles have labels thereon, caps thereon, and residual liquid therein. Foreign object "0" in 505 indicates that there is no foreign object.

As described above, according to this embodiment, it is possible to acquire and output the state information on the recycling of a plastic container. Therefore, this configuration enables good recycling of a plastic container according to the state of the plastic container. That is to say, according to this embodiment, it is possible to assist in good recycling of a plastic container.

Furthermore, according to this embodiment, it is possible to grasp the recycling status of multiple plastic containers.

Furthermore, according to this embodiment, it is possible to output the recycling status of a plastic container for each user.

In this embodiment, the processing of the output apparatus 1 may be shared by multiple apparatuses.

The processing in this embodiment may be realized by software. The software may be distributed by software downloads or the like. Furthermore, the software may be distributed in a form where the software is stored in a recording medium such as a CD-ROM. The same applies to other embodiments in this specification. The software that realizes the output apparatus 1 in this embodiment is the following sort of program. Specifically, this program is a program for causing a computer to function as: a state acquisition unit that acquires state information for specifying a state of recycling of a plastic container; and an information output unit that outputs information that is based on the state information.

### Embodiment 2

This embodiment is different from Embodiment 1 in that the output apparatus is physically separated from the collection apparatus.

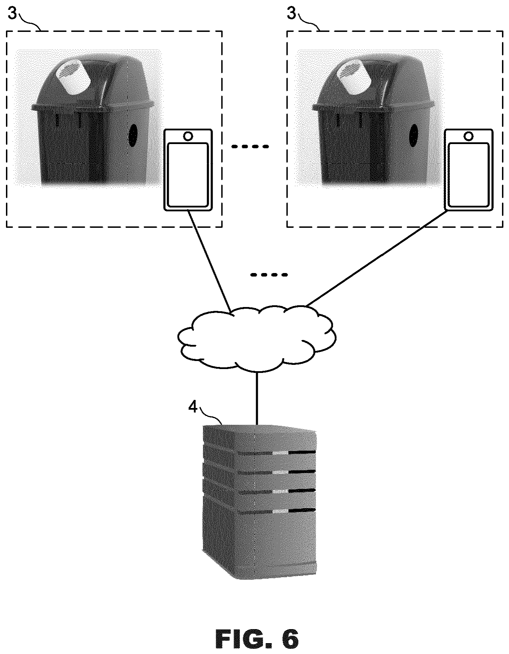

FIG. 6 is a conceptual diagram of a collection system B in this embodiment. The collection system B includes one or two or more collection apparatuses 3 and an output apparatus 4.

The collection apparatuses 3 are apparatuses that collect a plastic container, acquire sensing information on the plastic container, and transmit the information to the output apparatus 4. The collection apparatuses 3 are realized by, for example, personal computers, smartphones, tablet devices, or the like, but there is no limitation on the type thereof. The sensing information is, for example, a captured images or the weight.

The output apparatus 4 is an apparatus that receives sensing information on a plastic container, and acquires state information or performs statistical processing using the sensing information. The output apparatus 4 is, for example, a so-called server. The output apparatus 4 is realized by, for example, a cloud server or an ASP server, but there is no limitation on the type thereof.

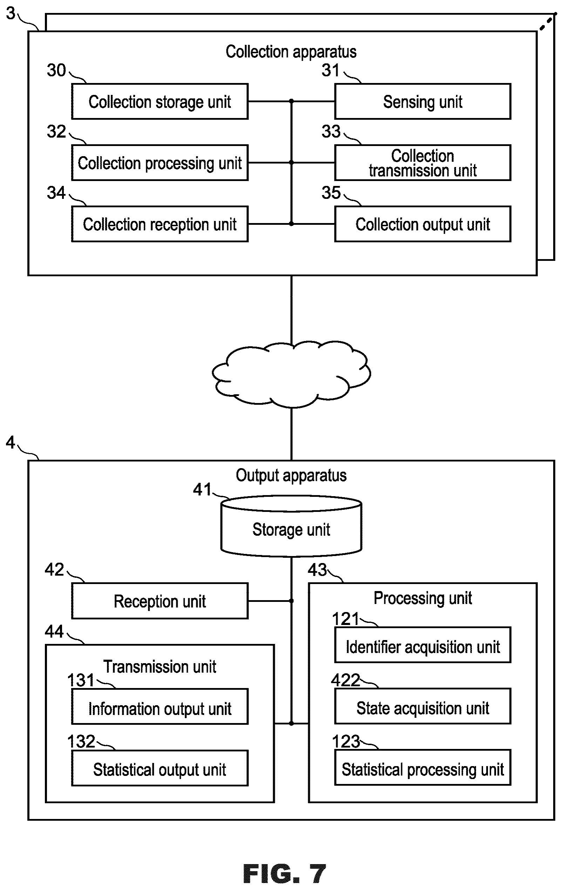

FIG. 7 is a block diagram of the collection system B in this embodiment. Each collection apparatus 3 constituting the collection system B includes a collection storage unit 30, a sensing unit 31, a collection processing unit 32, a collection transmission unit 33, a collection reception unit 34, and a collection output unit 35.

The output apparatus 4 includes a storage unit 41, a reception unit 42, a processing unit 43, and a transmission unit 44. The processing unit 43 includes the identifier acquisition unit 121, a state acquisition unit 422, and the statistical processing unit 123. The transmission unit 44 includes the information output unit 131 and the statistical output unit 132.

Various types of information are stored in the collection storage unit 30 constituting the collection apparatus 3. The various types of information are, for example, a collection apparatus identifier. The collection apparatus identifier is information for identifying a collection apparatus 3.

The sensing unit 31 senses a plastic container, thereby acquiring sensing information. For example, the sensing unit 31 captures an image of a plastic container, thereby acquiring a captured image. The sensing unit 31 acquires, for example, the weight of a plastic container. The sensing unit 31 may acquire a user identifier. The user identifier is an identifier of a user who placed a plastic container.

The collection processing unit 32 performs various types of processing. The various types of processing are, for example, processing that changes the sensing information acquired by the sensing unit 31 into sensing information with a structure for transmission. The various types of processing are, for example, processing that configures information having the sensing information acquired by the sensing unit 31 and the collection apparatus identifier of the collection storage unit 30. The various types of processing are, for example, processing that configures information having the sensing information acquired by the sensing unit 31 and a user identifier. The various types of processing are, for example, processing that configures information having the sensing information acquired by the sensing unit 31, a user identifier, and the collection apparatus identifier of the collection storage unit 30.

The collection transmission unit 33 transmits information. The information is, for example, the sensing information, the sensing information and the collection apparatus identifier, the sensing information and the user identifier, or the sensing information and the user identifier and the collection apparatus identifier.

The collection reception unit 34 receives information. The collection reception unit 34 acquires, for example, one or two or more types of state information and a score from the output apparatus 4.

The collection output unit 35 outputs the information received by the collection reception unit 34 or information that is based on the received information.

Various types of information are stored in the storage unit 41 constituting the output apparatus 4. The various types of information are, for example, the above-described one or more learning models or the above-described various images.

The reception unit 42 receives various types of information from collection apparatuses 3. The various types of information are, for example, sensing information, sensing information and a collection apparatus identifier, sensing information and a user identifier, or sensing information and a user identifier and a collection apparatus identifier.

The processing unit 43 performs various types of processing. The various types of processing are, for example, processing that is performed by the identifier acquisition unit 121, the state acquisition unit 422, and the statistical processing unit 123.

The identifier acquisition unit 121 acquires the user identifier received by the reception unit 42.

The state acquisition unit 422 acquires one or two or more pieces of state information, using the sensing information received by the reception unit 42. The processing in which the state acquisition unit 422 acquires state information using the sensing information is the same as that of the state acquisition unit 122 and was described in Embodiment 1.

The transmission unit 44 transmits various types of information. The various types of information are, for example, the one or two or more pieces of state information or score acquired by the state acquisition unit 422 or the statistical results acquired by the statistical processing unit 123. The transmission unit 44 transmits, for example, the information to the collection apparatuses 3 or an unshown user terminal.

The collection storage unit 30 and the storage unit 41 are preferably non-volatile recording media, but they may also be realized by volatile recording media.

There is no limitation on the procedure in which information is stored in the collection storage unit 30 and the like. For example, information may be stored in the collection storage unit 30 and the like via a recording medium, information transmitted via a communication line or the like may be stored in the collection storage unit 30 and the like, or information input via an input device may be stored in the collection storage unit 30 and the like.

The sensing unit 31 is realized by, for example, a camera or a weight sensor.

The collection processing unit 32 and the processing unit 43 may be typically realized by processors, memories, or the like. Typically, the processing procedure of the collection processing unit 32 and the like is realized by software, and the software is stored in a recording medium such as a ROM. However, the collection processing unit 32 and the like may be realized by hardware (dedicated circuits). The processors are, for example, CPUs, MPUs, GPUs, or the like, but there is no limitation on the type thereof.

The collection transmission unit 33, the transmission unit 44, the information output unit 131, and the statistical output unit 132 are typically realized by wireless or wired communication parts, but they may also be realized by broadcasting parts.

The collection reception unit 34 and the reception unit 42 are typically realized by wireless or wired communication parts, but they may also be realized by broadcast receiving parts.

The collection output unit 35 may be considered to include or to not include an output device such as a display screen or a speaker. The collection output unit 35 may be realized by driver software for an output device, a combination of driver software for an output device and the output device, or the like.

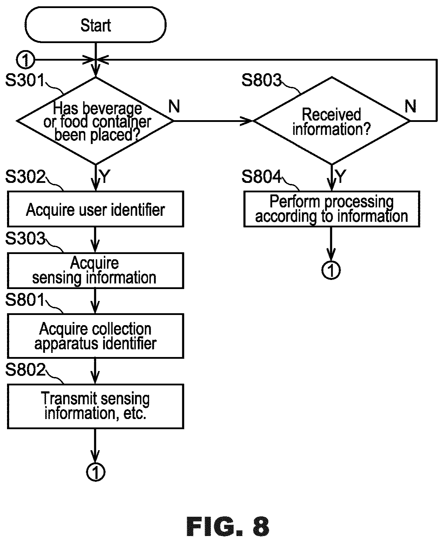

Next, an operation example of the collection system B will be described. First, an operation example of the collection apparatus 3 will be described with reference to the flowchart in FIG. 8. In the flowchart in FIG. 8, a description of the same steps as those in the flowchart in FIG. 3 has been omitted.

(Step S801) The collection processing unit 32 acquires a collection apparatus identifier from the collection storage unit 30.

(Step S802) The collection processing unit 32 configures information having the acquired sensing information and the acquired user identifier and collection apparatus identifier. The collection transmission unit 33 transmits the information to the output apparatus 4.

(Step S803) The collection reception unit 34 determines whether or not it has received information from the output apparatus 4. If it has received information, the procedure advances to step S804, or otherwise the procedure returns to step S301.

(Step S804) The collection processing unit 32 and the like perform processing according to the information received in step S803. The procedure returns to step S301.

In the flowchart in FIG. 8, the processing ends at power off or at an interruption of terminating processing.

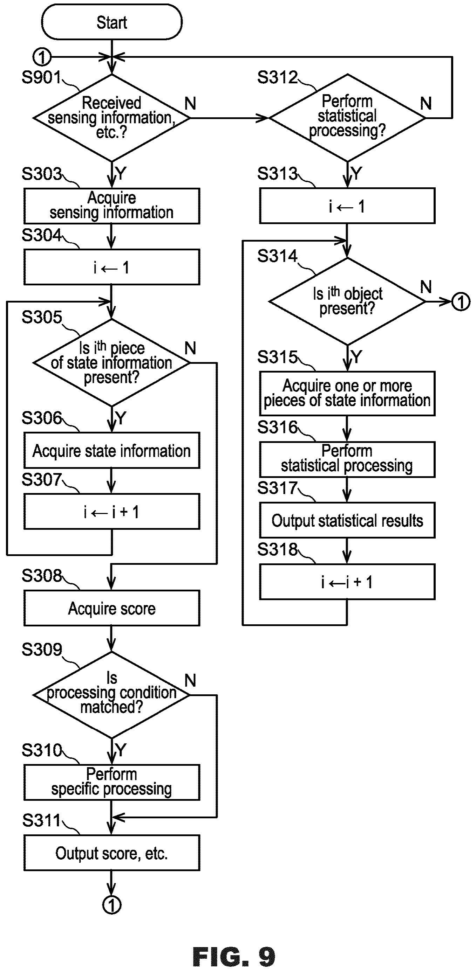

Next, an operation example of the output apparatus 4 will be described with reference to the flowchart in FIG. 9. In the flowchart in FIG. 9, a description of the same steps as those in the flowchart in FIG. 3 has been omitted.

(Step S901) The reception unit 42 determines whether or not it has received sensing information or the like from the collection apparatus 3. If it has received sensing information or the like, the procedure advances to step S303, or otherwise the procedure advances to step S312.

In the flowchart in FIG. 9, the processing ends at power off or at an interruption of terminating processing.

As described above, according to this embodiment, it is possible to acquire and output the state information on the recycling of a plastic container. Therefore, this configuration enables good recycling of a plastic container according to the state of the plastic container. That is to say, according to this embodiment, it is possible to assist in good recycling of a plastic container.

Furthermore, according to this embodiment, it is possible to grasp the recycling status of multiple plastic containers.

Moreover, according to this embodiment, it is possible to output the recycling status of a plastic container for each user or for each collection apparatus 3, for example.

Furthermore, the output apparatus 1, the collection apparatus 3, and the output apparatus 4 of the foregoing embodiments may be realized using computer hardware and a computer program executed thereon.

Furthermore, a computer that executes the above-described program may be a single computer or may be multiple computers. That is to say, centralized processing may be performed, or distributed processing may be performed.

Furthermore, in the foregoing embodiments, it will be appreciated that two or more communication parts in one apparatus may be physically realized by one medium.

Furthermore, in the foregoing embodiments, each process may be realized as centralized processing using a single apparatus, or may be realized as distributed processing using multiple apparatuses.

The present invention is not limited to the embodiments set forth herein. Various modifications are possible within the scope of the invention.

### Industrial Applicability

As described above, the output apparatus 1 according to the present invention has an effect of making it possible to assist in good recycling of plastic containers, thus rendering this apparatus useful as an apparatus that constitutes a collection apparatus for plastic containers, and the like.

## Claims

1. An output apparatus comprising:
a state acquisition unit that acquires sensing information on a plastic container placed into a collection apparatus, with respect to recycling of the plastic container, and acquires state information for specifying a state of the recycling of the plastic container, using the sensing information; and
an information output unit that outputs information that is based on the state information,
wherein the sensing information is a captured image of the plastic container, and
the state acquisition unit acquires the state information, using the captured image.

2. An output apparatus comprising:
a state acquisition unit that acquires sensing information on a plastic container placed into a collection apparatus, with respect to recycling of the plastic container, and acquires state information for specifying a state of the recycling of the plastic container, using the sensing information; and
an information output unit that outputs information that is based on the state information,
wherein the sensing information is a weight acquired using a weight sensor, and
the state acquisition unit acquires the state information, using the weight.

3. An output apparatus comprising:
a state acquisition unit that acquires sensing information on a plastic container placed into a collection apparatus, with respect to recycling of the plastic container, and acquires state information for specifying a state of the recycling of the plastic container, using the sensing information; and
an information output unit that outputs information that is based on the state information,
wherein the sensing information is a captured image of the plastic container and a weight acquired using a weight sensor, and
the state acquisition unit acquires the state information, using the captured image and the weight.

4. The output apparatus according to any one of claims 1 to 3,
wherein the state information acquires the state information containing a score that is based on the state of the recycling of the plastic container.

5. The output apparatus according to any one of claims 1 to 4,
wherein the state of the recycling of the plastic container includes one or two or more states among presence or absence of a label on the plastic container, presence or absence of a cap thereon, whether or not the plastic container has been crushed, whether or not the plastic container has been rinsed out, and presence or absence of an unfinished drink (leftover) in the plastic container.

6. The output apparatus according to any one of claims 1 to 5, further comprising:
a statistical processing unit that performs statistical processing on the state information on two or more plastic containers acquired by the state acquisition unit, thereby acquiring statistical results; and
a statistical output unit that outputs the statistical results.

7. The output apparatus according to any one of claims 1 to 6, further comprising:
an identifier acquisition unit that acquires a user identifier of a user who threw away the plastic container,
wherein the information output unit outputs information that is based on the state information in a pair with the user identifier.

8. A collection apparatus for plastic containers, comprising the output apparatus according to any one of claims 1 to 7.

9. An output apparatus comprising:
a state acquisition unit that receives sensing information on a plastic container placed into a collection apparatus for plastic containers, and acquires state information for specifying a state of recycling of the plastic container, using the sensing information; and
an information output unit that outputs information that is based on the state information.

10. An information output method realized using a state acquisition unit and an information output unit, comprising:
a state acquisition step in which the state acquisition unit acquires state information for specifying a state of recycling of a plastic container; and
an information output step in which the information output unit outputs information that is based on the state information.

11. A recording medium having recorded thereon a program for causing a computer to function as:
a state acquisition unit that acquires state information for specifying a state of recycling of a plastic container; and
an information output unit that outputs information that is based on the state information.
